# EUROPEAN PATENT APPLICATION

(11) **EP 4 640 654 A1**
(43) Date of publication of application: **29.10.2025**
(21) Application number: 23906972.7
(22) Date of filing: 18.12.2023
(51) Int. Cl.: C04B 35/64, C04B 35/584, G01N 21/84

(54) **METHOD FOR INSPECTING AMOUNT OF FLOOR POWDER ADHERED, AND METHOD FOR PRODUCING CERAMIC SUBSTRATE USING SAME**

(30) Priority: 19.12.2022 JP 2022201731
(71) Applicant: Kabushiki Kaisha Toshiba, Tokyo 105-0023 (JP); Toshiba Materials Co., Ltd., Isogo-Ku Yokohama-Shi Kanagawa 235-0032 (JP)
(72) Inventor: SUEMORI, Kazuma, Yokohama-shi, Kanagawa 235-0032 (JP)
(74) Representative: Hoffmann Eitle
(86) International application number: PCT/JP2023/045280
(87) International publication number: WO 2024/135612

(57) **Abstract**

An inspection method that inspects an adhesion amount of a bed powder on a ceramic compact is provided. Also, a method for manufacturing a ceramic substrate using the inspection method is provided. A method for inspecting an amount of adhered bed powder according to an embodiment includes an adhesion process and an inspection process. The adhesion process includes adhering a bed powder to a surface of a ceramic compact. The inspection process includes inspecting an adhesion amount of the bed powder by using a photoelectric sensor or an image sensor and by detecting a reflected light or a transmitted light of the surface.

## Description

### [Technical Field]

Embodiments below relate generally to a method for inspecting an amount of adhered bed powder, and a method for manufacturing a ceramic substrate using a method for inspecting an amount of adhered bed powder.

### [Background Art]

Ceramic substrates are used as circuit substrates on which semiconductor elements are mounted. Various ceramic substrates are used, such as silicon nitride substrates, aluminum nitride substrates, aluminum oxide substrates, zirconium oxide substrates, alumina zirconia substrates, etc. An alumina zirconia substrate is a substrate in which zirconium oxide and aluminum oxide are mixed. An alumina zirconia substrate also is called an Alusil substrate.

A manufacturing process of a ceramic substrate includes a raw material mixing process, a forming process, a degreasing process, a sintering process, etc. In the raw material mixing process, a raw material paste is prepared by mixing a raw material powder and an organic binder. In the forming process, a sheet-like compact is prepared from the raw material paste. In the degreasing process, the binder is removed from the sheet-like compact. In the sintering process, the sheet-like compact after degreasing is sintered. The degreasing process and the sintering process are performed after the sheet-like compact is cut into a prescribed size. In the sintering process, the sheet-like compacts are stacked to increase the manufacturing efficiency. A bed powder is used when stacking the compacts. By using the bed powder, the sheet-like compacts can be prevented from undesirably bonding to each other.

For example, in Japanese Patent No. 5339214 (Patent Literature 1), the particle size and adhesion amount of a bed powder are controlled. Waviness of the ceramic substrate surface is reduced by controlling the adhesion amount of the bed powder, etc.

### [Prior Art Documents]

### [Patent Literature]

Patent Literature 1: Japanese Patent No. 5339214
Patent Literature 2: Japanese Utility Model Application Laid-Open No. H10-84

### [Summary of Invention]

### [Problem to be Solved by the Invention]

Waviness of a ceramic substrate surface can be reduced by controlling the adhesion amount of a bed powder as in Patent Literature 1. However, a phenomenon has occurred in which the yield decreases as the amount of processing increases (the production volume of the ceramic substrate increases, the sheet becomes larger, etc.). By investigating the cause, the cause was found to be fluctuation of the adhesion amount of the bed powder on the ceramic compact. For example, in Patent Literature 1, the bed powder is adhered by spraying. In Japanese Utility Model Application Laid-Open No. H10-84 (Patent Literature 2), the bed powder is adhered using an applicator or a brush. The bed powder is a powder having a small average particle size of not more than 20 µm. In recent years, the sheet-like compact before cutting is becoming larger and longer. Also, to increase the production efficiency, the bed powder is adhered while moving the sheet-like compact. As a result, a phenomenon of uneven adhesion of the bed powder has been occurring. Uneven adhesion of the bed powder is difficult to discriminate with the naked eye, even when uneven adhesion occurs. When the sintering process is performed even though uneven adhesion has occurred, a ceramic substrate that has a large surface unevenness may be manufactured.

Embodiments are directed to address such problems, and are directed to provide a method that inspects an adhesion amount of a bed powder on a ceramic compact.

### [Means for Solving the Problem]

A method for inspecting an amount of adhered bed powder according to an embodiment includes an adhesion process and an inspection process. The adhesion process includes adhering a bed powder to a surface of a ceramic compact. The inspection process includes inspecting an adhesion amount of the bed powder by using a photoelectric sensor or an image sensor and by detecting a reflected light or a transmitted light of the surface.

### [Brief Description of Drawings]

[FIG. 1]

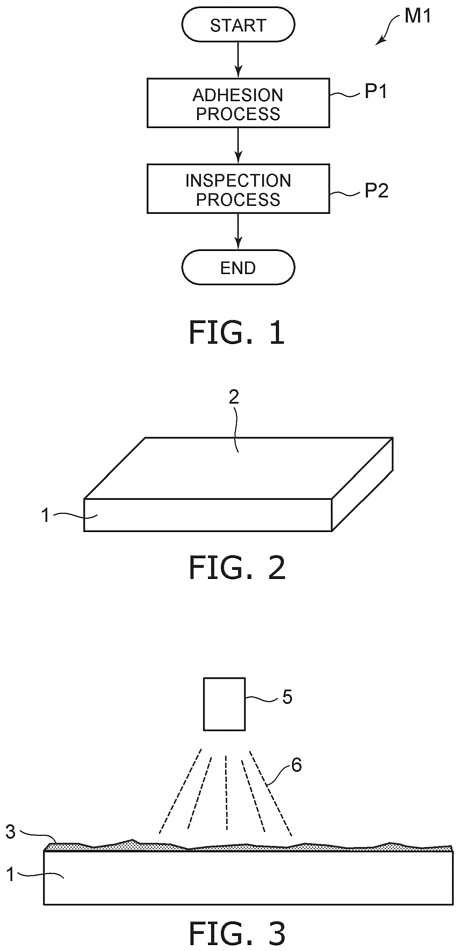

   FIG. 1 is a flowchart showing an example of a method for inspecting an amount of adhered bed powder according to an embodiment.
[FIG. 2]
   FIG. 2 is a drawing showing an example of a ceramic compact according to the embodiment.
[FIG. 3]
   FIG. 3 is a drawing showing an example of a method of adhering a bed powder by using a spray technique.
[FIG. 4]

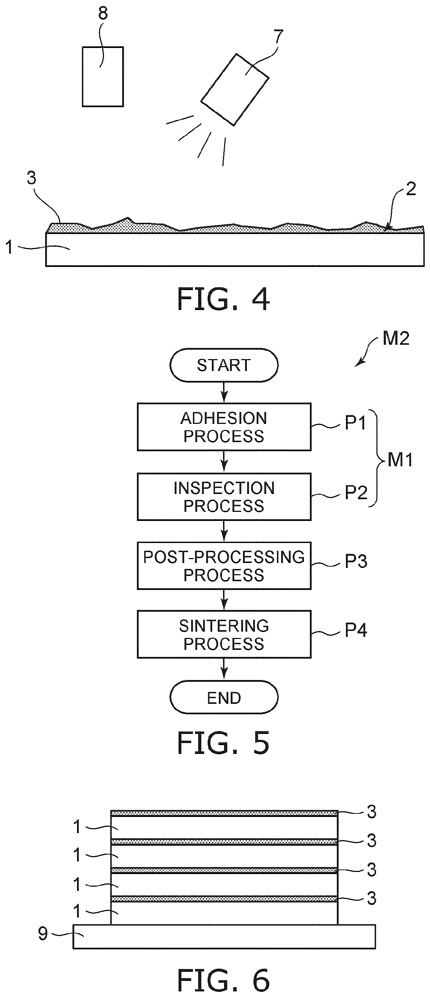

   FIG. 4 is a drawing showing an example of a method of inspecting an adhesion amount of the bed powder.
[FIG. 5]
   FIG. 5 is a flowchart showing a method for manufacturing a ceramic substrate according to an embodiment.
[FIG. 6]
   FIG. 6 is a drawing showing an example of the method for manufacturing the ceramic substrate according to the embodiment.

### [Description of Embodiments]

A method for inspecting an amount of adhered bed powder according to an embodiment includes an adhesion process and an inspection process. The adhesion process includes adhering a bed powder to a surface of a ceramic compact. The inspection process includes inspecting an adhesion amount of the bed powder by using a photoelectric sensor or an image sensor and by detecting a reflected light or a transmitted light of the surface.

FIG. 1 is a flowchart showing an example of a method for inspecting an amount of adhered bed powder according to an embodiment. As shown in FIG. 1, the inspection method M1 of the amount of adhered bed powder according to the embodiment includes an adhesion process P1 of adhering a bed powder to a ceramic compact, and an inspection process P2 of inspecting the adhesion amount of the bed powder.

FIG. 2 is a drawing showing an example of a ceramic compact according to the embodiment. In FIG. 2, the reference numeral 1 is a ceramic compact, and the reference numeral 2 is a surface of the ceramic compact 1. First, the ceramic compact 1 shown in FIG. 2 is prepared. The ceramic compact 1 is a compact in which a ceramic powder is formed. An organic binder, etc., may be added to the ceramic compact 1 as necessary. The shape of the ceramic compact 1 is not particularly limited, and may be a sheet-like shape, a circular shape, a shape including an unevenness, etc. The sheet-like ceramic compact 1 will now be described as an example.

The ceramic compact 1 includes, for example, one selected from silicon nitride, aluminum nitride, aluminum oxide, zirconium oxide, and silicon carbide as a major component. The major component is the most plentiful component among the components included in the ceramic sintered compact. For example, the ceramic compact 1 that includes silicon nitride as a major component becomes a silicon nitride sintered compact after sintering. The ceramic compact 1 that includes aluminum oxide as a major component becomes an aluminum oxide sintered compact after sintering.

When two or more selected from silicon nitride, aluminum nitride, aluminum oxide, zirconium oxide, and silicon carbide are mixed, the more plentiful component is taken as the major component. For example, an Alusil sintered compact is a sintered compact in which aluminum oxide and zirconium oxide are mixed. When aluminum oxide is the most plentiful component in an Alusil sintered compact, the Alusil sintered compact becomes an aluminum oxide sintered compact after sintering. Other than the major component, the ceramic sintered compact may include a sintering aid.

The method for manufacturing the ceramic compact 1 includes a doctor blade technique, die molding, cold isostatic pressing (CIP), injection molding, etc. As described below, the doctor blade technique is favorable when making a ceramic substrate. A degreasing process is performed on the ceramic compact 1 as necessary. In other words, a degreased body on which a degreasing process has been performed also is included in the ceramic compact 1. The degreasing process may be performed before adhering the bed powder to the ceramic compact 1, or may be performed after adhering the bed powder to the ceramic compact 1.

Then, the adhesion process P1 of adhering the bed powder to the surface 2 of the prepared ceramic compact 1 is performed. Methods of adhering the bed powder include a method that uses spraying, a method of passing the ceramic compact 1 through a solution in which the bed powder is dispersed, a method that uses a brush, a method that uses static electricity, a method that uses gravure printing, a method of immersing the ceramic compact 1 in a solution including the bed powder, etc. As described below, a method that uses spraying is favorable when the ceramic compact 1 is included in a ceramic substrate. The spray amount of the bed powder can be stabilized when a spray technique is used. Spray techniques include a method of spraying only a bed powder, and a method of spraying a solution in which a bed powder is dispersed. A method that sprays a solution in which a bed powder is dispersed is more favorable as the spray technique. Agglomeration of the bed powder can be suppressed by dispersing the bed powder in the solution beforehand.

FIG. 3 is a drawing showing an example of a method of adhering a bed powder by using a spray technique. In FIG. 3, the reference numeral 3 is a bed powder adhesion layer, the reference numeral 5 is a spray, and the reference numeral 6 is a bed powder. FIG. 3 shows an example in which the spray 5 sprays a bed powder 6 from above the ceramic compact 1. As shown in FIG. 3, the spray 5 may spray the bed powder 6 from directly above the ceramic compact 1, or may spray the bed powder 6 from obliquely above the ceramic compact 1. Also, although one spray 5 sprays the bed powder 6 in the example shown in FIG. 3, multiple sprays 5 each may spray the bed powder 6.

The bed powder 6 is a powder of one or more selected from boron nitride, zirconium oxide, aluminum oxide, and aluminum nitride. The bed powder adhesion layer 3 is formed by adhering the bed powder 6 to the surface 2 of the ceramic compact 1. The bed powder adhesion layer 3 performs the role of preventing the ceramic sintered compacts from bonding to each other when multiple ceramic compacts 1 are stacked and sintered. That is, a powder that does not bond with the ceramic sintered compact in the sintering process of the ceramic sintered compact is used as the bed powder 6.

It is favorable for the bed powder 6 to be a powder of boron nitride. As described below, a ceramic sintered compact is manufactured by sintering the ceramic compact 1 at 1,600 to 2,000 °C. Boron nitride does not bond easily with ceramic sintered compacts, even in high-temperature environments. Boron nitride has various structures such as hexagonal, cubic, rhombohedral, etc. Among these, hexagonal boron nitride is favorable. There are also cases where hexagonal boron nitride is notated as h-BN.

It is favorable for the average particle size of the bed powder 6 to be not more than 20 µm. By reducing the average particle size, it becomes easier to form the bed powder adhesion layer 3 with a uniform film thickness on the surface 2 of the ceramic compact 1. When the average particle size is large and is greater than 20 µm, there is a possibility that the film thickness of the bed powder adhesion layer 3 may become nonuniform, and the surface properties of the ceramic sintered compact may be unfavorably affected. It is therefore favorable for the average particle size of the bed powder 6 to be not more than 20 µm. The average particle size of the bed powder is more favorably not more than 10 µm, and even more favorably not more than 6 µm. Although the lower limit of the average particle size of the bed powder 6 is not particularly limited, it is favorable to be not less than 2 µm. When the average particle size is less than 2 µm, there is a possibility that the handling may degrade.

Then, the inspection process P2 of inspecting the amount of the bed powder 6 adhered to the surface 2 of the ceramic compact 1 is performed. The inspection process includes inspecting the adhesion amount of the bed powder 6 by using a photoelectric sensor or an image sensor and by detecting a reflected light or a transmitted light of the surface 2.

The photoelectric sensor includes a light-projecting part that emits light, and a light-receiving part that receives light. The light that is emitted from the light-projecting part is irradiated on the ceramic compact 1 on which the bed powder adhesion layer 3 is formed. When a reflection-type photoelectric sensor is used, the light that is reflected by the surface 2 of the ceramic compact 1 on which the bed powder adhesion layer 3 is formed is detected by the light-receiving part. When a transmission-type photoelectric sensor is used, the light that passed through the ceramic compact 1 on which the bed powder adhesion layer 3 is formed is detected by the light-receiving part. An infrared ray, a laser, or the like is used as the light of the light-projecting part. The wavelength of infrared light is greater than the wavelength of visible light. Monochromatic visible light is used as the laser. When the photoelectric sensor is used, it is favorable to irradiate the light on the bed powder adhesion layer 3 and detect the reflected light.

The image sensor includes a camera and an image processor. The camera forms an image on the light-receiving surface of an image sensor (an imaging element) by causing the incident light from the object (the surface 2 of the ceramic compact 1 on which the bed powder adhesion layer 3 is formed) to pass through an optical system such as a lens, etc., and converts the image into an electrical signal. Image data is obtained thereby. The image processor detects features of the object by performing image processing of the data output by the camera. When the image sensor is used, light is irradiated on the bed powder adhesion layer 3, and the reflected light is detected.

It is favorable for the image sensor to be an infrared image sensor or an ultraviolet image sensor. An infrared image sensor is a sensor that detects infrared (having a wavelength of not less than 780 nm and not more than 1,000 µm). An ultraviolet image sensor is a sensor that detects ultraviolet (having a wavelength of not less than 10 nm and not more than 400 nm). When the ultraviolet image sensor is used, a phosphor that is caused to emit light by ultraviolet light may be mixed into the bed powder. By mixing the phosphor, the detection accuracy of the reflected light can be increased.

The intensity of the light detected by the sensor is dependent not only on the adhesion amount of the bed powder 6, but also on the intensity of the light irradiated on the ceramic compact 1. To reduce the effects of fluctuation of the intensity of the irradiated light on the inspection result, it is favorable to use a lighting device in the inspection process. The lighting device emits light of a preset intensity. The lighting device emits infrared light when an infrared image sensor is used. The lighting device emits ultraviolet light when an ultraviolet image sensor is used.

When the image sensor is used, the lighting device that irradiates the light may be either a coaxial system or a reflecting system. In a coaxial system, the light that is incident on the object is positioned on the same optical axis as the light reflected from the object. In a reflecting system, the direction of the light irradiated on the surface of the object is different from the direction of the light reflected from the object.

FIG. 4 is a drawing showing an example of a method of inspecting an adhesion amount of the bed powder. In FIG. 4, the reference numeral 7 is a lighting device, and the reference numeral 8 is a sensor. In the example shown in FIG. 4, the lighting device 7 irradiates light from obliquely above the surface 2. The sensor 8 detects light reflected by the surface 2 from directly above. The lighting device 7 is not limited to the example shown in FIG. 4; and multiple lighting devices 7 may be provided to uniformly illuminate the portions of the surface 2.

Comparing the photoelectric sensor and the image sensor, the image sensor is favorable. The image sensor can detect light in a wide area simultaneously. Comparing the infrared image sensor and the ultraviolet image sensor, the infrared image sensor is favorable. By utilizing infrared, effects caused by natural light and indoor light do not occur easily. Also, by utilizing infrared, effects caused by human shadows, object shadows, etc., do not occur easily.

It is favorable to utilize edge detection on an image generated by detecting the reflected light or the transmitted light. Edge detection is processing for detecting edges in an image, and is one type of feature detection (feature detection). An "edge" is a region at which the gradient of the pixel values (the luminances) between pixels that are adjacent to each other is greater than a threshold. The pixel values are dependent on the brightness of the object (the intensity of the reflected light or the transmitted light). A point at which the change of the brightness changes greatly is considered to be a point at which the shape or material properties of the object change greatly. The color of the bed powder is brighter than the color of the ceramic compact 1. Therefore, the brightness of the object increases as the adhesion amount of the bed powder increases. Also, when a prescribed amount or more of the bed powder is adhered, the color of the ceramic compact 1 is no longer visible, and the brightness of the object no longer changes.

For example, when the adhesion amount of the bed powder is low, a luminance difference occurs between a portion of the surface of the ceramic compact 1 at which the adhesion amount of the bed powder is high and a portion at which the adhesion amount of the bed powder is low. Accordingly, the boundary between the portion at which the adhesion amount of the bed powder is high and the portion at which the adhesion amount of the bed powder is low is detected as an edge. More edges will be detected also when the overall adhesion amount of the bed powder on the ceramic compact 1 surface is insufficient. The edges that are detected in the entire ceramic compact 1 decrease as the adhesion amount of the bed powder increases. When the overall adhesion amount of the bed powder on the ceramic compact 1 surface becomes excessive, the ratio of the portions at which the luminance is high increases, and edges become difficult to detect.

That is, when the adhesion amount is appropriate, a luminance that corresponds to the adhesion amount is detected. A range of appropriate luminances is set, and edge detection is performed for luminances outside the range. The occurrences of luminances outside the range are detected as the number of edges. In other words, the adhesion amount of the bed powder can be kept within the appropriate range by adhering the bed powder to the ceramic compact 1 to keep the luminance within the range.

For example, if a yield of not less than 90% is used as the target value, it is also effective to set the target value based on data in which results having a yield of not less than 90% are obtained. Such a method is a method of setting the target value to be the luminance of the edge portions of the ceramic compact 1 to which the bed powder is adhered when a yield of not less than 90% is obtained.

Also, in the process of inspecting the adhesion amount of the bed powder by using the process of detecting the reflected light, the goodness determination of the amount of adhered bed powder can use any reference. Edge pixels are detected by utilizing edge detection to inspect the adhesion amount of the bed powder. The edge pixels become large when the adhesion amount of the bed powder is high; and the edge pixels become small when the adhesion amount of the bed powder is low. This phenomenon is utilized to set the range of edge pixels for the goodness determination. The range of edge pixels that is set is arbitrary. When a small value is used for the edge pixel, the likelihood of a defective part mixing with parts determined to be good increases. Also, when a large value is used for the edge pixel, the likelihood of a good part mixing with parts determined to be defective increases. It is therefore favorable to set the edge pixel for goodness determination by collecting data of edge pixels of good parts and edge pixels of defective parts. The edge pixels have small values when the adhesion amount of the bed powder is low with respect to the target value. Also, the edge pixels have large values when the adhesion amount is high with respect to the target value. Also, an example of the edge pixels for the goodness determination is within the range of 100±60 when the target value is set to 100. This means that parts having edge pixels within the range of 100±60 are determined to be good. The plus or minus range can be arbitrarily changed. Also, a method that uses machine learning is effective when performing goodness determination.

In the adhesion process P1, the bed powder 6 may be adhered while the ceramic compact 1 is in a stopped state, or the bed powder 6 may be adhered while the ceramic compact 1 is moving. More favorably, the bed powder 6 is adhered by a spray technique while moving the ceramic compact 1. The suitability for mass production can be improved by adhering the bed powder 6 while moving the ceramic compact 1.

As described above, methods for forming the ceramic compact 1 include various methods such as a doctor blade technique, die molding, etc. According to a doctor blade technique, wide and long sheet-like compacts can be made. The bed powder 6 is adhered to the long sheet-like compact by the spray technique. The long sheet-like compact to which the bed powder 6 is adhered is used in the next process by being wound into a roll shape. By adhering the bed powder 6 while moving the ceramic compact 1, the processes of sheet forming, adhering the bed powder 6, inspecting the adhesion amount of the bed powder 6, and winding the compact into a roll shape can be continuously performed.

In die molding, the sheet-like compact is made using a mold. According to die molding, a sheet-like compact that corresponds to the mold size is manufactured. The suitability for mass production can be improved by adhering the bed powder 6 while conveying with a belt conveyor, etc.

In the inspection process P2, the adhesion amount may be inspected while the ceramic compact 1 is in a stopped state, or the adhesion amount may be inspected while moving the ceramic compact 1. For the inspection process P2 as well, the suitability for mass production can be further improved by performing while moving the ceramic compact 1. Also, by using a photoelectric sensor or an image sensor, the adhesion amount of the bed powder 6 can be inspected even while moving the ceramic compact 1.

According to a method for inspecting the amount of adhered bed powder such as that described above, the adhesion amount of the bed powder 6 can be efficiently inspected. Also, the suitability for mass production can be improved because the inspection is performed while moving the ceramic compact 1. The method for inspecting the amount of adhered bed powder according to the embodiment can be used in a method for manufacturing a ceramic sintered compact.

FIG. 5 is a flowchart showing a method for manufacturing a ceramic substrate according to an embodiment. As shown in FIG. 5, the manufacturing method M2 of the ceramic substrate according to the embodiment includes a process of performing the inspection method M1 (the adhesion process P1 and the inspection process P2), a post-processing process P3, and a sintering process P4. The inspection method M1 determines whether or not the adhesion amount of the bed powder 6 is within a prescribed range. The post-processing process P3 is performed in the case where the adhesion amount of the bed powder 6 is determined to be more than the prescribed range, or in the case where the adhesion amount of the bed powder 6 is determined to be less than the prescribed range. The post-processing process P3 is omissible in the case where the adhesion amount of the bed powder 6 is determined to be within the prescribed range.

For example, a process of reducing the adhesion amount of the bed powder 6 may be performed as the post-processing process P3 when the amount of adhered bed powder is determined to be high by the method for inspecting the amount of adhered bed powder. A defective part can be converted into a good part by reducing the amount when much of the bed powder 6 is adhered. The yield of the ceramic sintered compact can be increased thereby. A method that uses air blowing or the like is performed to reduce the adhesion amount of the bed powder 6. In the air blowing, the adhesion amount of the bed powder 6 is reduced by blowing off the excess bed powder 6 by blowing air on the surface 2 of the ceramic compact 1. After performing the process of reducing the adhesion amount of the bed powder 6, the method for inspecting the amount of adhered bed powder according to the embodiment may be performed as necessary.

A process of removing the ceramic compact 1 to which much of the bed powder 6 is adhered may be performed as the post-processing process P3 in the case where the amount of adhered bed powder is determined to be high by the method for inspecting the amount of adhered bed powder. When a long sheet-like compact is made, it is sufficient for locations to which much of the bed powder 6 is adhered to be removed by the removing process. When multiple sheet-like compacts are made, it is sufficient to remove the compact to which much of the bed powder 6 is adhered.

A process of re-adhering the bed powder 6 may be performed as the post-processing process P3 in the case where the amount of adhered bed powder is determined to be low by the method for inspecting the amount of adhered bed powder. A defective part can be converted into a good part by re-adhering the bed powder 6. The yield of the ceramic sintered compact can be increased thereby. Also, after re-adhering the bed powder 6, the method for inspecting the amount of adhered bed powder according to the embodiment may be performed as necessary.

In the case where the amount of adhered bed powder is determined to be low by the method for inspecting the amount of adhered bed powder, a process of removing the ceramic compact 1 to which less of the bed powder 6 is adhered may be performed as the post-processing process P3. When a long sheet-like compact is made, it is sufficient for locations to which less of the bed powder 6 is adhered to be removed by the removing process. When multiple sheet-like compacts are made, it is sufficient to remove the compact to which less of the bed powder 6 is adhered.

In the sintering process P4, the ceramic compact 1 in which the amount of adhered bed powder is controlled within the prescribed range is sintered, and a ceramic sintered compact is obtained. When the bed powder 6 is adhered to a long sheet-like compact, the ceramic sintered compact is cut to the necessary size. It is favorable for the sintering temperature of the sintering process P4 to be within the range of not less than 1,600 °C and not more than 2,000 °C. The pressure of the space in which the sintering process P4 is performed may be pressurized, atmospheric pressure, or decompressed. Various atmospheres are applicable to the sintering process P4 such as ambient air, an inert atmosphere, a vacuum, etc.

FIG. 6 is a drawing showing an example of the method for manufacturing the ceramic substrate according to the embodiment. In FIG. 6, the reference numeral 9 is a bottom board. In the sintering process P4 as shown in FIG. 6, the ceramic compact 1 on which the bed powder adhesion layer 3 is located is placed on the bottom board 9. The bottom board 9 includes a boron nitride plate, etc. The multiple ceramic compacts 1 on which the bed powder adhesion layers 3 are located are placed by stacking. Another bottom board 9 may be placed on the multiple stacked ceramic compacts 1 as necessary. Furthermore, other multiple ceramic compacts 1 on which the bed powder adhesion layers 3 are located may be placed by stacking on the bottom board 9.

Because the amount of adhered bed powder at the surface 2 of the ceramic compact 1 is controlled, the occurrence of defective parts can be suppressed, even when the sintering process is performed in a state in which the multiple ceramic compacts 1 on which the bed powder adhesion layers 3 are located are placed by stacking. For example, ceramic sintered compacts that are placed by stacking can be prevented from bonding to each other.

Also, the ceramic sintered compacts that are placed by stacking can be detached from each other with a small stress. A small stress is, for example, a human force, the force of air by air blowing, etc. When a large stress is necessary to detach, from each other, the ceramic sintered compacts placed by stacking, there is a possibility that the ceramic sintered compacts may be damaged when detaching. For this point as well, according to the embodiment, the yield can be increased.

Also, an unevenness at the ceramic sintered compact surface can be suppressed. It is favorable for the ceramic sintered compact to be a ceramic substrate. Unevenness of the surface 2 can be suppressed by controlling the amount of adhered bed powder to be within a prescribed range, even when the thickness of the ceramic substrate is not more than 3 mm. Furthermore, the surface unevenness can be suppressed, even when the thickness of the ceramic substrate is not more than 1 mm. In other words, the inspection method according to the embodiment is suited to a method for manufacturing a ceramic substrate.

It is favorable for the ceramic substrate to be a silicon nitride substrate. Examples of the ceramic substrate include a silicon nitride substrate, an aluminum nitride substrate, an aluminum oxide substrate, a zirconium oxide substrate, a silicon carbide substrate, etc. Among these, silicon nitride substrates are expensive, and so the effect of yield improvement is large.

### (Examples)

### (Examples 1 to 8 and Comparative Examples 1 to 2)

A silicon nitride compact was prepared as a ceramic compact for Examples 1 to 6. A long sheet-like compact was made by doctor blade as the silicon nitride compact. The width of the long sheet-like compact was 1 m. The thickness of the sheet-like compact was set to obtain a silicon nitride substrate having a thickness of 0.32 mm as a sintered compact.

An aluminum nitride compact was prepared as the ceramic compact for Example 7. The long sheet-like compact was made by doctor blade as the aluminum nitride compact. The width of the long sheet-like compact was 1 m. The thickness of the sheet-like compact was set to obtain an aluminum nitride substrate having a thickness of 0.635 mm as the sintered compact.

An aluminum oxide compact was prepared as the ceramic compact for Example 8. A long sheet-like compact was made by doctor blade as the aluminum oxide compact. The width of the long sheet-like compact was 1 m. The thickness of the sheet-like compact was set to obtain an aluminum oxide substrate having a thickness of 0.635 mm as the sintered compact.

An adhesion process of adhering the bed powder to the surface of the long sheet-like compact was performed for the examples and the comparative examples. A boron nitride (BN) powder was used as the bed powder. The bed powder was adhered to the ceramic compact by a spray technique. An inspection process was performed on the ceramic compact to which the bed powder was adhered. Table 1 shows the preparation conditions of the compacts, the conditions when adhering the bed powder, the conditions of the inspection process, etc.

**[Table 1]**

| | Ceramic compact | BN bed powder | Presence of movement | Sensor | Presence of edge detection | Range of edge pixels considered good |
|---|---|---|---|---|---|---|
| | | Average particle size (µm) | | | | |
| Example 1 | Si₃N₄ | 6 | No | Infrared image sensor | Yes | 100±60 |
| Example 2 | Si₃N₄ | 4 | Yes | Infrared image sensor | Yes | 100±50 |
| Example 3 | Si₃N₄ | 5 | Yes | Infrared image sensor | Yes | 100±50 |
| Example 4 | Si₃N₄ | 10 | Yes | Ultraviolet image sensor | Yes | 100±50 |
| Example 5 | Si₃N₄ | 6 | Yes | Photoelectric sensor | Yes | 100±50 |
| Example 6 | Si₃N₄ | 5 | Yes | Ultraviolet image sensor | Yes | 100±50 |
| Example 7 | AlN | 8 | Yes | Ultraviolet image sensor | Yes | 100±50 |
| Example 8 | Al₂O₃ | 9 | Yes | Ultraviolet image sensor | Yes | 100±50 |
| Comparative Example 1 | Si₃N₄ | 10 | No | - | - | - |
| Comparative Example 2 | Si₃N₄ | 10 | Yes | - | - | - |

For "presence of movement" in Table 1, "yes" indicates that the bed powder was adhered to the compact while moving the sheet-like compact. "No" indicates that the bed powder was adhered to the compact while the sheet-like compact was in a stopped state. "Presence of edge detection" indicates whether or not edge detection was performed on the image that was obtained. "Range of edge pixels considered good" was set based on data in which the yield was not less than 98%. In the examples, the regions that were less than the edge pixels considered good were removed. That is, the sintering process was performed on the parts determined to be good by the method for inspecting the amount of adhered bed powder according to the embodiment.

The sheet-like compact to which the bed powder was adhered was cut to be 200 mm×150 mm. The compacts that were cut were stacked, and the sintering process was performed. The sintering process was performed within the range of 1,700 to 1,900 °C. Ceramic substrates were made by the sintering process. One thousand ceramic substrates were made for each of the examples and the comparative examples; and the yield and the surface flatness were checked.

For the yield, ceramic substrates that could be detached by air blowing or human force were considered good. Ceramic substrates that could not be detached by air blowing or human force and ceramic substrates that were damaged when detaching were considered defective. The yield (%) was the ratio of good parts out of 1,000. Examples having yields of not less than 99% and not more than 100% were taken as "excellent", examples that were not less than 95% but less than 99% were taken as "good", and examples that were less than 95% were taken as "defective".

For the surface flatness, ceramic substrates of which the difference between the maximum value of the protrusions and the maximum value of the recesses of the surface was not more than 50 µm were considered good. The difference between the maximum value of the protrusions and the maximum value of the recesses was calculated by image analysis of the surface of the ceramic substrate. Examples in which the percentage of ceramic substrates having a difference of 50 µm or less between the maximum value of the protrusions and the maximum value of the recesses was not less than 98% and not more than 100% were taken as "excellent"; examples that were not less than 95% but less than 98% were taken as "good"; and examples that were less than 95% were taken as "defective". The results are shown in Table 2.

**[Table 2]**

| | Yield | Surface flatness |
|---|---|---|
| Example 1 | Excellent | Excellent |
| Example 2 | Excellent | Excellent |
| Example 3 | Excellent | Excellent |
| Example 4 | Excellent | Excellent |
| Example 5 | Excellent | Excellent |
| Example 6 | Excellent | Excellent |
| Example, 7 | Excellent | Excellent |
| Example 8 | Excellent | Excellent |
| Comparative Example 1 | Good | Good |
| Comparative Example 2 | Defective | Defective |

It can be seen from Table 2 that the yield and the surface flatness were improved when the methods for manufacturing the ceramic sintered compacts according to the examples were used. The best results were obtained for Example 2 which satisfied the favorable conditions. Therefore, it can be seen that the inspection method effectively functions even when the bed powder was adhered while moving the sheet-like compact. On the other hand, the yield and flatness of Comparative Example 1 and Comparative Example 2 were less than those of the examples because the inspection method according to the embodiment was not applied. This is because the uneven adhesion of the bed powder could not be ascertained. In particular, as in Comparative Example 2, uneven adhesion occurred easily when the bed powder was adhered while moving the sheet-like compact. The yield and the flatness were lower because compacts in which uneven adhesion occurred were sintered.

Then, a process for making the part good was performed on the compacts that were determined to be defective by the methods for inspecting the amounts of adhered bed powder according to Examples 1 to 8. A portion of the bed powder was removed by air blowing in regions in which the adhesion amount of the bed powder was determined to be high. The bed powder was re-adhered to the regions in which the adhesion amount of the bed powder was determined to be low. Subsequently, the sintering process was performed similarly to Examples 1 to 8. The yield and the surface flatness were checked for the ceramic substrates that were obtained. The measurement conditions were the same as those of Examples 1 to 8. The results are shown in Table 3.

**[Table 3]**

| | Defective parts | Yield | Surface flatness |
|---|---|---|---|
| Example 1B | Example 1 | Excellent | Excellent |
| Example 2B | Example 2 | Excellent | Excellent |
| Example 3B | Example 3 | Excellent | Excellent |
| Example 4B | Example 4 | Excellent | Excellent |
| Example 5B | Example 5 | Excellent | Excellent |
| Example 6B | Example 6 | Excellent | Excellent |
| Example 7B | Example 7 | Excellent | Excellent |
| Example 8B | Example 8 | Excellent | Excellent |

In Example 1B of Table 3, the amount of adhered bed powder of the compacts determined to be defective for Example 1 were controlled to amounts determined to be good. Similarly, for Examples 2B to 8B as well, the amount of adhered bed powder of the compacts determined to be defective for Examples 2 to 8 were controlled to amounts determined to be good.

It can be seen from Table 3 that the defective parts could be converted into good parts by re-controlling the amounts of adhered bed powder to be appropriate amounts. By using a discrimination method that used the method for inspecting the amount of adhered bed powder according to the embodiment, a process can be performed so that only the compacts determined to be defective are improved to be good. The productivity can be increased thereby. Also, the environmental performance can be improved because the amount of compacts that were scrapped was reduced.

Embodiments of the invention include the following features.

### Feature 1

A method for inspecting an amount of adhered bed powder, the method comprising:
an adhesion process of adhering a bed powder to a surface of a ceramic compact; and
an inspection process of inspecting an adhesion amount of the bed powder by using a photoelectric sensor or an image sensor and by detecting a reflected light or a transmitted light of the surface.

### Feature 2

The method for inspecting the amount of adhered bed powder according to Feature 1, wherein
the image sensor is an infrared image sensor or an ultraviolet image sensor, and
the detecting of the reflected light of the surface is performed using the infrared image sensor or the ultraviolet image sensor.

### Feature 3

The method for inspecting the amount of adhered bed powder according to Feature 1 or Feature 2, wherein
the inspection process includes performing edge detection on an image obtained by the detecting of the reflected light or the transmitted light.

### Feature 4

The method for inspecting the amount of adhered bed powder according to any one of Features 1 to 3, wherein
an average particle size of the bed powder is not more than 20 µm.

### Feature 5

The method for inspecting the amount of adhered bed powder according to any one of Features 1 to 4, wherein
the ceramic compact is a silicon nitride compact.

### Feature 6

The method for inspecting the amount of adhered bed powder according to any one of Features 1 to 5, wherein
the bed powder is a boron nitride powder.

### Feature 7

The method for inspecting the amount of adhered bed powder according to any one of Features 1 to 6, wherein
the adhesion process includes adhering the bed powder to the surface by a spray technique while moving the ceramic compact.

### Feature 8

A method for manufacturing a ceramic substrate, the method comprising:
performing the method for inspecting the amount of adhered bed powder according to any one of Features 1 to 7; and
a sintering process of sintering the ceramic compact determined to be good by the method for inspecting.

### Feature 9

The method for manufacturing the ceramic substrate according to Feature 8, comprising:
reducing the adhesion amount in the case where the adhesion amount is determined to be high.

### Feature 10

The method for manufacturing the ceramic substrate according to Feature 8, comprising:
in the case where the adhesion amount is determined to be high, removing the ceramic compact having much of the bed powder adhered.

### Feature 11

The method for manufacturing the ceramic substrate according to Feature 8, comprising:
re-adhering the bed powder in the case where the adhesion amount is determined to be low.

### Feature 12

The method for manufacturing the ceramic substrate according to Feature 8, comprising:
in the case where the adhesion amount is determined to be low, removing the ceramic compact having little of the bed powder adhered.

While certain embodiments have been described, these embodiments have been presented by way of example only, and are not intended to limit the scope of the inventions. Indeed, the novel embodiments described herein may be embodied in a variety of other forms; furthermore, various omissions, substitutions, and changes in the form of the embodiments herein may be made without departing from the spirit of the inventions. The accompanying claims and their equivalents are intended to cover such forms or modifications as would fall within the scope and spirit of the inventions. Also, the embodiments above can be implemented in combination with each other.

### [Reference Numeral List]

- 1: ceramic compact
- 2: surface portion
- 3: bed powder adhesion layer
- 4: sensor

## Claims

1. A method for inspecting an amount of adhered bed powder, the method comprising:
an adhesion process of adhering a bed powder to a surface of a ceramic compact; and
an inspection process of inspecting an adhesion amount of the bed powder by using a photoelectric sensor or an image sensor and by detecting a reflected light or a transmitted light of the surface.

2. The method for inspecting the amount of adhered bed powder according to claim 1, wherein
the image sensor is an infrared image sensor or an ultraviolet image sensor, and
the detecting of the reflected light of the surface is performed using the infrared image sensor or the ultraviolet image sensor.

3. The method for inspecting the amount of adhered bed powder according to claim 1 or claim 2, wherein
the inspection process includes performing edge detection on an image obtained by the detecting of the reflected light or the transmitted light.

4. The method for inspecting the amount of adhered bed powder according to claim 1 or claim 2, wherein
an average particle size of the bed powder is not more than 20 µm.

5. The method for inspecting the amount of adhered bed powder according to claim 3, wherein
an average particle size of the bed powder is not more than 20 µm.

6. The method for inspecting the amount of adhered bed powder according to claim 1 or claim 2, wherein
the ceramic compact is a silicon nitride compact.

7. The method for inspecting the amount of adhered bed powder according to claim 5, wherein
the ceramic compact is a silicon nitride compact.

8. The method for inspecting the amount of adhered bed powder according to claim 1 or claim 2, wherein
the bed powder is a boron nitride powder.

9. The method for inspecting the amount of adhered bed powder according to claim 6, wherein
the bed powder is a boron nitride powder.

10. The method for inspecting the amount of adhered bed powder according to claim 7, wherein
the bed powder is a boron nitride powder.

11. The method for inspecting the amount of adhered bed powder according to claim 1 or claim 2, wherein
the adhesion process includes adhering the bed powder to the surface by a spray technique while moving the ceramic compact.

12. The method for inspecting the amount of adhered bed powder according to claim 8, wherein
the adhesion process includes adhering the bed powder to the surface by a spray technique while moving the ceramic compact.

13. The method for inspecting the amount of adhered bed powder according to claim 10, wherein
the adhesion process includes adhering the bed powder to the surface by a spray technique while moving the ceramic compact.

14. A method for manufacturing a ceramic substrate, the method comprising:
performing the method for inspecting the amount of adhered bed powder according to claim 1 or claim 2; and
a sintering process of sintering the ceramic compact determined to be good by the method for inspecting.

15. The method for manufacturing the ceramic substrate according to claim 14, comprising:
reducing the adhesion amount in the case where the adhesion amount is determined to be high.

16. The method for manufacturing the ceramic substrate according to claim 14, comprising:
in the case where the adhesion amount is determined to be high, removing the ceramic compact having much of the bed powder adhered.

17. The method for manufacturing the ceramic substrate according to claim 14, comprising:
re-adhering the bed powder in the case where the adhesion amount is determined to be low.

18. The method for manufacturing the ceramic substrate according to claim 14, comprising:
in the case where the adhesion amount is determined to be low, removing the ceramic compact having little of the bed powder adhered.
